# EUROPEAN PATENT SPECIFICATION

(11) **EP 0 440 412 B1**
(45) Date of publication and mention of the grant of the patent: **27.10.1993**
(21) Application number: 91300650.8
(22) Date of filing: 29.01.1991
(51) Int. Cl.: B01J 4/00, B01D 3/16, B01D 53/18

(54) **Vapor horn**
Dampfhorn
Cornet à vapeur

(30) Priority: 31.01.1990 US 472835
(43) Date of publication of application: 07.08.1991
(73) Proprietor: GLITSCH, INC., Dallas Texas 75212 (US)
(72) Inventor: Lee, Adam, Richardson, Texas 75082 (US); Chen, Gilbert, Farmers Branch, Texas 75234 (US); Holmes, Tim, Andover, New Jersey 07821 (US)
(74) Representative: Hitchcock, Esmond Antony

(56) References cited:
- DE-C- 764 103
- FR-A- 1 481 836
- US-A- 3 217 469

## Description

The present invention relates to chemical process columns and, more particularly, to vapor diffusers for evenly distributing vapor flow within such process columns.

It is well known in the prior art to utilize various types of exchange columns in which a gas and a liquid come into contact with one another, preferably in a counter-current flow for purposes of mass or heat transfer, close fractionation and/or separation of feed stock constituents, and other unit operations. Efficient operation requires mass transfer, heat transfer, fluid vaporization and/or condensation, whereby one of the fluids can be cooled with a minimum pressure drop through a particular zone or zones of minimum dimensions defined in the area and volume thereof. These are pre-requisites for efficient operation and are necessary for close fractionation. For this reason, counter-current flow of vapor and liquid within such exchange columns, or process towers, have become established methods of such vapor liquid contact in the prior art. The actual vapor-liquid interface requires the utilization of a packing bed positioned within the column. Liquid is then distributed atop the packing bed in the most feasible manner while vapor is distributed beneath the packing bed in the lower region of the tower. In this manner, liquid trickling downwardly through the packing bed is exposed to, and in contact with, the vapor ascending therethrough for vapor-liquid contact and interaction.

It is well established that the configuration of the vapor flow in the lower region of the tower adjacent the vapor input nozzle is critical to uniform vapor-liquid contact. This is more so when structured packing beds are utilized as compared to trays. With trays, there is little concern about initial vapor distribution because pressure drop across a trayed column is high. For trayed tower with approximately 50 trays, a pressure drop on the order of 6 PSI (300 mmHg) is common in the prior art. This is, however, more than an order of magnitude greater than the kinetic energy generated by the incoming vapor. The velocity head of vapor entering the distillation column is generally no more than 10 mmHg in petroleum refining fractionators and no more than 5 mm in chemical or gas treating columns. It is true, however, that when the trays of a 50 tray tower are replaced by packing, the pressure drop through the column is typically reduced by a full order of magnitude, to wit: on the order of 30 mmHg. This is especially true of structured packing such as that set forth and described in U.S. Patent No. 4,604,247 assigned to the assignee of the present invention. If the kinetic energy of the feed vapor is kept at 10 mm or more, severe mal-distribution will occur. Since it is not usually economical to oversize the vapor nozzle or to enlarge the existing one, a well designed vapor distribution system is absolutely essential for smooth start up and operation.

There are two conventional vapor nozzle designs for atmospheric or vacuum process towers, to wit: tangential and straight run. When atmospheric and vacuum type towers are addressed, special care is taken to handle the large volume of vapor. Tangential baffles or vapor horns have been incorporated in the prior art. In these configurations, the vapor flow is directed through a housing or horn, and deflected by the baffles prior to ascension through the column. In a straight run configuration, gravity is used to effect the separation of vapor from the solids and liquids that are discharged beneath the vapor trajectory. Upward vapor distribution may also be improved across the column section by utilizing a tapered channel with preset diffuser vanes. With either configuration an additional vapor distribution tray above the feed nozzle may be necessary to insure uniform distribution of the ascending vapor.

Both single and multiple vapor nozzles may be utilized for process columns. Vapor feed nozzles have, for example, been placed 180 degrees apart as well as 90 degrees apart around the circumference of a column. For either configuration, a properly designed vapor distributor is a requirement and select patterns of diffuser vanes may be utilized. With such a configuration it may be necessary to again place an additional vapor distribution tray above the entrance nozzle to insure uniform distribution. This is particularly true of configurations adapted for handling two phase flow. In heavy oil refining contamination of the vapor from the bottom black oil must be minimized.

The present invention is directed at a vapor horn assembly for mounting in a chemical process column adjacent a vapor nozzle to distribute vapor therefrom into a vapor region. The assembly has a housing with a circular inside wall and a top plate secured thereabove, and adapted for securement to the inside wall of the process column adjacent to and in flow communication with the vapor nozzle; and a plurality of vanes of predefined height symmetrically disposed within the housing for directing the flow of vapor from the nozzle and through the housing into the column for establishing a homogenous vapor region, the vanes being axially staggered within the housing and comprising a plurality of angulated plates, each having a predefined width and including an upper arcuate region adapted for engaging vapor flow from the nozzle and a lower planar section adapted for diverting such engaged vapor flow, the lower planar sections of said plates being constructed with a cut away portion having a width on the order of one third of the plate width and an axial height on the order of one half the preferred vane height, the cut away portion facilitating the escape of liquid dispersed thereupon during vapor flow, and the plates being secured within said housing at a predefined angle to the inside wall diameter. Typically eight vanes are symmetrically disposed around the housing.

The invention will now be described, by way of example, and with reference to the accompanying drawings wherein:
Fig. 1 is a perspective view of a chemical process column with various sections thereof cut away for purposes of illustrating one embodiment of the vapor horn of the present invention;
Fig. 2 is a top plan diagrammatic view of a prior art vapor horn embodiment;
Fig. 3 is a top plan diagrammatic view of another prior art vapor horn embodiment;
Fig. 4 is an enlarged, top plan view of Fig. 1 taken along lines 4-4 thereof and illustrating one embodiment of the vapor horn of the present invention;
Fig. 5 is an enlarged, side elevational, cross-sectional view of the vapor horn of Fig. 4 taken along lines 5-5 thereof;
Fig. 6 is an enlarged, front elevational view of a single vane of the vapor horn of Fig. 4;
Fig. 7 is a side elevational, cross-sectional view of the vapor horn of Fig. 4 taken along lines 7-7 thereof and illustrating the vapor nozzle relative to the vapor horn housing;
Fig. 8 is an alternative embodiment of the vapor nozzle and vapor horn housing assembly illustrating the structural modification for flow volume sizing; and
Fig. 9 is an enlarged, side elevational, diagrammatic view of the flow vanes of the vapor horn of Fig. 4 illustrating their relative positioning within the housing.

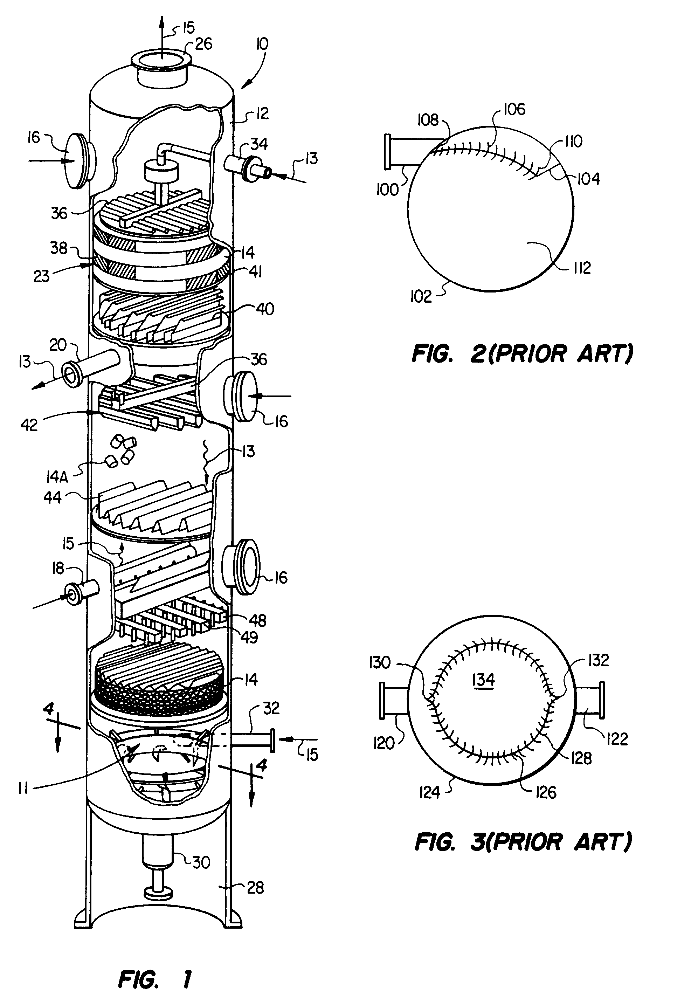

Referring first to Fig. 1 there is shown a perspective view of a packed exchange tower or column with various sections cut away for illustrating a variety of internals and the utilization of one embodiment of the vapor horn 11 of the present invention. The exchange column 10 of Fig. 1 comprises a cylindrical tower 12 having a plurality of packing bed layers 14 disposed therein. A plurality of manways 16 are likewise constructed for facilitating access to the internal region of the tower 12 for replacement of the packing beds 14. Also provided are side stream draw off line 20, liquid side feed line 18, and side stream vapor feed line or reboiler return line 32. A reflux return line 34 is provided atop the tower 10.

In operation, liquid 13 is fed into the tower 10 through reflux return line 34 and side stream feed input feed line 18. The liquid 13 flows downwardly through the tower and ultimately leaves the tower either at side stream draw off 20, or at bottom stream draw off line 30. In its downward flow, the liquid 13 is depleted of some material which evaporates from it as it passes through the packing beds, and is enriched or added to by material which condenses into it out of the vapor stream.

Still referring to Fig. 1, the exchange column 10 further includes a vapor outlet, overhead line 26 disposed atop the tower 12 and a lower skirt 28 disposed in the lower region of the tower around bottom stream takeoff line 30 coupled to a reboiler (not shown). A vapor distributor unit 11 connected to a vapor nozzle 32 is shown disposed above the skirt 28 for discharging vapor therein upwardly through the packing layers 14. It is in this area that both the prior art and the present invention focuses on vapor distribution. Prior art baffle and vane assemblies are generally disposed adjacent the nozzle 32. Reflux from condensers is provided in the upper tower region 23 through entry conduit 34 wherein reflux is distributed throughout a liquid distributor 36 across upper packing bed 38. It may be seen that the upper packing bed 38 is of the structured packing variety. The regions of the exchange column 10 beneath the upper packing bed 38 are shown for the purpose of illustration and include a liquid collector 40 disposed beneath a support grid 41 in support of the upper structured packing 38. A liquid distributor 42, adapted for redistributing liquid 13, is likewise disposed therebeneath and an intermediate support plate 44 is provided in an alternative configuration of the type adapted for supporting random packing 14A of either a ring or a saddle variety as representatively shown. Another liquid distributor 48 is disposed beneath plate 44 and comprises a plurality of troughs 49. The distributor 48 is constructed in an alternative embodiment utilizing a tube assembly set forth and described in detail in EP-A-0 367 525 assigned to the assignee of the present invention and incorporated herein by reference. It may be seen from this figure that the counter-current configuration between the ascending vapor 15 and the descending liquid 13 is the subject of a plurality of critical design considerations including liquid/vapor ratios, liquid cooling, foaming and the presence of solids or slurries therein. Corrosion is likewise a consideration of the various elements in the packed towers and the selection of the material in the fabrication of the tower internals is in many instances the results of such considerations. The anatomy of the packed column as shown in Fig. 1 is likewise described in more detail in an article by Gilbert Chen entitled "Packed Column Internals" appearing in the March 5, 1984 edition of Chemical Engineering, incorporated herein by reference.

Referring now to Fig. 2, there is shown a top plan diagrammatic view of a prior art vapor diffuser assembly of the type described above. A process column nozzle 100 is shown coupled to a process column 102. Diffuser assembly 104 is mounted within column 102 and is constructed with a plurality of prior art vanes 106. The diffuser vanes 106 are assembled in a variety of lengths for selectively diverting the vapor flow. Shorter diffuser vane 108 is for example disposed adjacent vapor nozzle 100 while a much larger diffuser vane 110 is disposed at the opposite end thereof. The effect of the diffuser vanes 106 is to reduce the directional flow of the vapor discharged from the vapor horn 100 and to cause sufficient turbulence for a degree of homogeneity to be imparted into the internal column region 112. The diffuser vanes 106 are diagrammatically shown for purposes of illustration. Certain housing sections may actually cover various sections or all of these vanes. The effectiveness of this and other prior art embodiments is the subject of the present invention.

Referring now to Fig. 3, there is shown an alternative embodiment of a prior art vapor diffuser. In this particular configuration, a pair of vapor nozzles 120 and 122 are positioned to discharge vapor from opposite sides of the process column 124. A diffuser assembly 126 is disposed therein having a plurality of diffuser vanes 128 mounted thereon. The orientation, size and configuration of the diffuser vanes 128 are varied depending on the location within the vessel 124 relative to the oppositely disposed nozzles 120 and 122. Adjacent each nozzle 120, 122 is a region of each diffuser 130 and 132, respectively, which is constructed for engaging and initially diverting the vapor flow therefrom. As above, the desired result is a higher degree of homogeneity of vapor flow in the intermediate region 134 between vapor nozzles 120 and 122. The manner in which the vapor is diffused and discharged into the intermediate region of the column is the subject of the present invention.

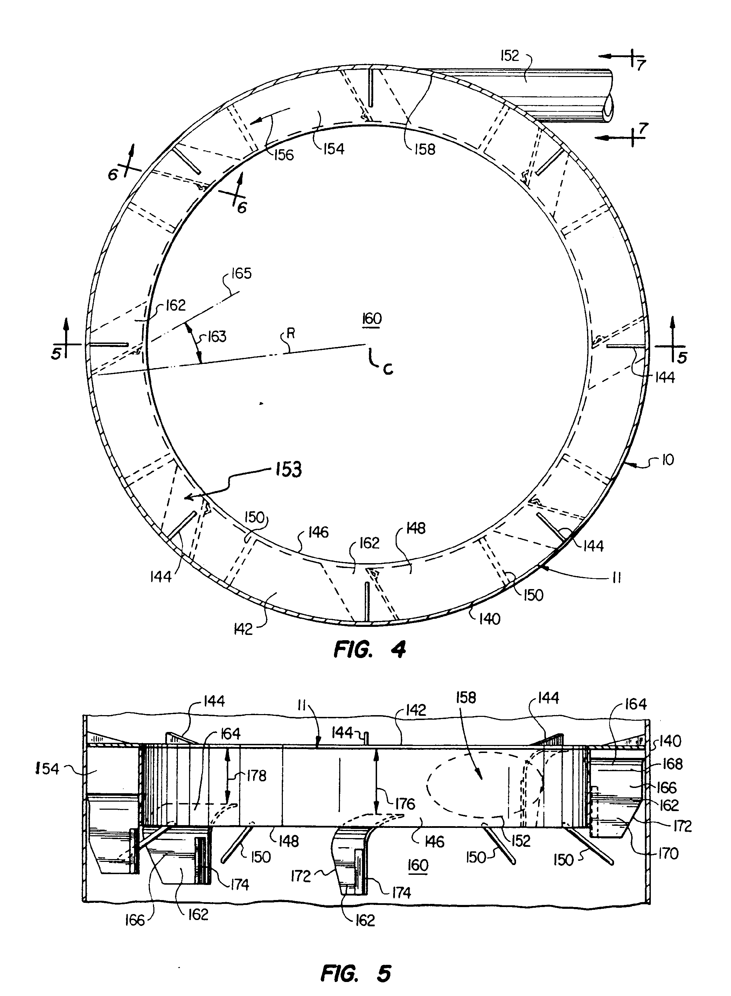

Referring now to Fig. 4, there is shown an enlarged top plan view of the vapor horn assembly 11 of Fig. 1. In this view, the vapor horn 11 is disposed within the cylindrical process column or tower wall 140. A top plate 142 comprising a ring shaped member is secured to the wall 140 and forms the top surface of the vapor horn. The top plate 142 is structurally secured to the side wall 140 of the tower by plurality of structural gusset plates 144. Plates 144 are fabricated to provide the requisite orthogonal interengagement between the top 142 and the vertical cylindrical walls 140 of the tower. In this configuration welding or similar securement technique are utilized.

Still referring to Fig. 4, the vapor horn 11 is further constructed with an inside wall 146, which is of a circular configuration forming a ring that is secured to the top 142. A vapor horn housing 153 is thereby defined between the top 142 and side 146 with the bottom 148 left open for discharge of vapor from the channel 154 therein. The side wall 146 is also secured to the column wall 140 by the utilization of struts 150 as shown in the present illustration. Other assemblies are also possible. In this configuration, sufficient structural rigidity and flow orientation is provided for disposing the housing adjacent a nozzle 152 in flow communication with the process tower. Vapor nozzle 152 thus feeds the hollow region or channel 154 of the vapor horn 11 for which the vapor flows in the direction of arrow 156. Between the nozzle 152 and the cylindrical side wall of the column 140 an ellipse 158 is formed as described in more detail below. With this flow configuration and a symmetrical array of vanes 162, vapor is diverted into central column region 160 for homogenous flow therefrom and homogenous ascension therein. The symmetrical array of vanes 162 has been shown to have an optimal efficiency when the angle of each vane to the radial line extended thereto, herein referred to as the radius, is on the order of 30°. As shown in Fig. 4 a radius R (radial line) drawn to the vane 162 from the center C of the column 10 creates an angle 163 relative to a line 165 representing the alignment of said vane 162 relative to said column 10. This angle 163 is preferably typical of all eight (8) vanes as experimentation has proven this to be the most effective angle.

Referring now to Fig. 5, there is shown a side elevational cross-sectional view of the vapor horn 11 of Fig. 4 taken along lines 5-5 thereof. The vapor horn 11 may be seen to comprise a complex integration of the vanes 162 relative to the channel 154 of said vapor horn. Each vane 162 is constructed with an upper arcuate region 164 and a lower planar region 166. A rectilinear transition region 168 provides the transition therebetween in a selected configuration adapted for engaging sections of the vapor flow emanating from the vapor horn 11 as described in more detail below. The bottom most region of the vane 170 includes a segmented section 172 that is removed outwardly of the vane 162. Experimentation has resulted in an optimal size of section 172 wherein the axial height thereof is on the order of 50% of the vane height and the width on the order of 33 1/3% of the vane width. By removing this lower section in the bottom region 170 of the vane 162 in the proportions described, heavier liquid droplets carried with the vapor stream from a discharge from nozzle 152 will be given an avenue of escape throughout the centrifugal flow pattern within channel 154. Segmented section 172 thus provides an improvement in prior art vane design by facilitating the segregation of liquid from the vapor flow while concomitantly channeling the vapor in a selected flow pattern for maximum homogenous interaction within the tower. Structural struts 174 are constructed within the side walls of the vanes 162 as shown herein.

The positioning of the vanes 152 within the channel 154 is likewise selectively provided. As seen in Fig. 5, the vertical or axial positioning of the vanes 162 within channel 154 is selected to present a staggered array of the vanes relative to the nozzle 152. Vanes 162 closer to the nozzle 152 are positioned in a lower region of the channel 154 so as to engage and divert a select section of the vapor flow therefrom. In this selectively staggered manner, as described in more detail below, a more uniform diverting of the vapor flow is facilitated in a manner maximizing homogenous interaction within the process column. Distance 176 is thus greater than distance 178 as shown in Fig. 5. These distances set forth the dimensional variation between the two respective vanes 162 adjacent the flow nozzle 152. This specific arrangement will be discussed in more detail below.

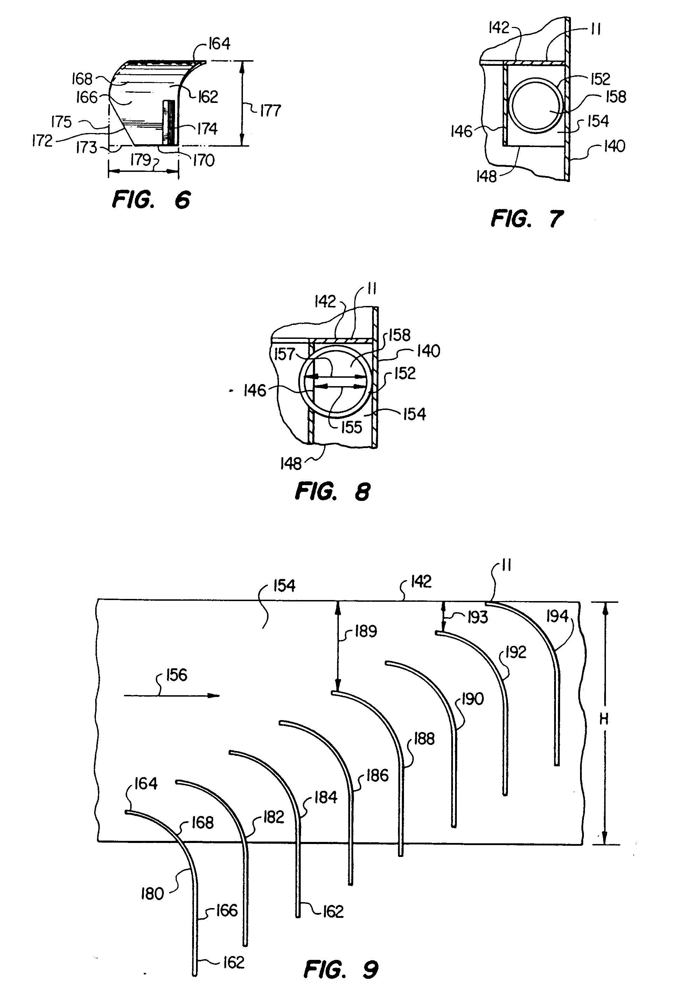

Referring now to Fig. 6, there is shown a perspective view of a single flow vane 162. The flow vane shown with solid lines to illustrate the arcuate top region 164 and the curvalinear transition region 168 connecting to planar section 166. With this particular configuration vapor flow is engaged and diverted downwardly. The structural section 174 is provided for affording increased structural rigidity at the outer region thereof where deflection is most likely to occur. Likewise the segmented section 172 is provided so that in the angulated configuration illustrated in Fig. 4, the vapor and liquid impacted thereagainst will be diverted, with the liquid finding one avenue of escape by virtue of the segmented sections. The segment 172 is shown to have an axial height 175 on the order of 50% of the height 177 of the vane 162. The segmented section 172 also has a width 173 on the order of 33 1/3% of the width 179 of the vane 162. In this proportion a high level of efficiency has been found to prevail over a wide operational spectrum.

Referring now to Fig. 7, there is shown a side elevation, cross-sectional view of the vapor nozzle of Fig. 4 with fragmentary portions cut away for purposes of clarity. This particular illustration shows the cross-sectional configuration of the channel 154 which is defined by the column side wall 140, vapor horn top 142 and vapor horn inside wall 146. The bottom 148 is open as discussed above. The diameter of the vapor nozzle 152 is substantially equivalent to or less than the width of the channel 154 and thus the volume of flow of vapor into the channel 154 is not adversely affected by a pressure increase. The pressure increase or "back pressure" can result if the flow area within a channel is equal or less than the flow area of the nozzle 152, particularly with the presence of vanes 162 which selectively impede the vapor flow therein. With the channel 154 having a cross-sectional area greater than the cross-sectional area of the nozzle 152, the back pressure problem is eliminated.

Referring now to Fig. 8, there is shown an alternative embodiment of the vapor nozzle-vapor horn interface. In this particular illustration, the vapor nozzle 152 has a diameter 157 which is greater than the width 155 of channel 154. With such a configuration, a view of the vapor horn through the vapor nozzle 152 will result in the appearance of the side wall 146 therein. This is because the width 155 of the channel 154 is less than the diameter 157 and therefore the inside walls 146, through its arcuate formation, will appear therein. The result thereof is the necessity for increasing the overall cross-sectional area of the channel 154 by extending the side wall 146 downwardly. A more rectangular configuration is thus presented in Fig. 8 as compared to than that shown in Fig. 7. In this manner, the rectangular, cross-sectional area of the vapor horn channel 154 is sufficiently greater than the circular, cross-sectional area of the vapor nozzle 152 for presenting a flow configuration with limited back pressure problems. Likewise, the bottom region 148 remains open for the discharge of vapor therefrom, said vapor discharge being effected by the vanes 162 described above.

Referring now to Fig. 9, there is shown an enlarged, diagrammatic, cross-sectional view of the channel 154 of the vapor horn illustrating a series of eight flow vanes disposed adjacent one another therein. The flow vanes 162 in the vapor horn channel 154 are diagrammatically shown adjacent one another for purposes for illustrating the variation in height therebetween. The flow of vapor within the channel 154 is illustrated by the arrow 156. The construction of each vane 162 includes an arcuate top region 164 above a planar bottom region 166. As described above, a curvalinear transition region 168 connects said upper and lower regions.

As shown in Fig. 9 the eight flow vanes 162 are each constructed of substantially equal size and shape. The vane 180 is positioned nearest the nozzle (not shown) for purposes of engaging and deflecting the lower most region of vapor discharge therefrom. Vane 182 is raised upperwardly therefrom an incremental distance facilitating engagement of a larger region of the flow channel 154. With the lower portion of the flow volume removed by vane 180, vane 182 is permitted to discharge a substantially equal amount of vapor although the vapor engagement area within channel 154 is somewhat larger than that of vane 180. Likewise, vane 184 projects a distance into channel 154 a distance greater than that of either vane 180 or 182. Vanes 186, 188, 190, 192, and 194 are each staggered upwardly to engage more area of vapor flow within channel 154. Distance 189 is, in the present embodiment, on the order of 3/8 of the height H of channel 154. Distance 193, in the present embodiment, is on the order of 1/8 of the height of channel 154.

It is thus believed that the operation and construction of the present invention will be apparent from the foregoing description. While the method and apparatus shown or described has been characterized as being preferred it will be obvious that various changes and modifications may be made therein without departing from the spirit and scope of the invention as defined in the following claims.

## Claims

1. A vapor horn assembly for mounting in a chemical process column adjacent a vapor nozzle (152) to distribute vapor therefrom into a vapor region, the assembly having a housing with a circular inside wall (140) and a top plate (142) secured thereabove, and adapted for securement to the inside wall of the process column (10) adjacent to and in flow communication with the vapor nozzle (152); and a plurality of vanes (162) of predefined height symmetrically disposed within the housing for directing the flow of vapor from the nozzle (152) and through the housing into the column (10) for establishing a homogenous vapor region, the vanes (162) being axially staggered within the housing and comprising a plurality of angulated plates, each having a predefined width and including an upper arcuate region (164) adapted for engaging vapor flow from the nozzle and a lower planar section (166) adapted for diverting such engaged vapor flow, the lower planar sections of said plates being constructed with a cut away portion (172) having a width on the order of one third of the plate width and an axial height on the order of one half the preferred vane height, the cut away portion facilitating the escape of liquid dispersed thereupon during vapor flow, and the plates being secured within said housing at a predefined angle to the inside wall diameter.

2. An assembly according to Claim 1 wherein eight vanes (162) are symmetrically disposed around the housing.

3. An assembly according to Claim 2 wherein the vanes (162) are each axially staggered one to the other a distance on the order of 1/8 of the axial length of the assembly.

4. An assembly according to any preceding Claim wherein the housing includes a top with a plurality of structural members (144) for welding to a said column.

5. An assembly according to any preceding Claim wherein the housing has a generally cylindrical, circular inside wall, with a plurality of struts (150) secured therearound for attachment to a said column.

6. An assembly according to any preceding Claim wherein the vanes (162) are disposed within the housing at an angle relative to the assembly axis to discharge vapor inwardly and downwardly from the vapor nozzle (152).

7. An assembly according to any preceding Claim wherein the predefined angle of the plates (162) is on the order of 30° from the radius of the housing extending outwardly to a said plate.

## Patentansprüche

1. Eine Dampfhorn-Anordnung, die in eine chemische Verfahrenskolonne neben ein Dampfansatzrohr (152) montiert wird, um aus diesem Dampf in den Dampfbereich zu verteilen, wobei die Anordnung ein Gehäuse mit einer kreisförmigen Innenwand (140) und einer Deckplatte (142), die auf dieser befestigt ist, besitzt und so angepaßt ist, daß sie an der Innenwand der Verfahrenskolonne (10) neben und in Stömungsverbindung zu dem Dampfansatzrohr (152) befestigt werden kann; und mehrere Flügel (162) bestimmter Höhe, die in dem Gehäuse symmetrisch verteilt sind, damit der Dampfstrom aus dem Ansatzrohr (152) und durch das Gehäuse in die Kolonne (10) geleitet wird. um eine homogen gemischte Dampfphase zu schaffen, wobei die Flügel (162) in dem Gehäuse axial versetzt angeordnet sind und aus mehreren im Winkel angebrachten Platten bestehen, von denen jede eine bestimmte Breite hat und einen oberen gebogenen Bereich (164), der so angepaßt ist, daß er den Dampfstrom aus dem Ansatzrohr auf sich lenkt, und einen unteren planaren Bereich (166) umfaßt, der so angepaßt ist, daß er diesen auf sich gelenkten Dampfstrom ableitet, wobei der untere planare Bereich dieser Platten mit einem abgeschnittenen Teil (172) konstruiert ist, der eine Breite in der Größenordnung eines Drittels der Plattenbreite hat, und eine axiale Höhe in der Größenordnung der Hälfte der bevorzugten Flügelhöhe, wobei das abgeschnittene Teil das Ausströmen der Flüssigkeit erleichtert, die während des Dampfströmens darauf verteilt wird. und die Platten in diesem Gehäuse in einem bestimmten Winkel zu dem Innenwanddurchmesser angebracht sind.

2. Eine Anordnung nach Anspruch 1, in der acht Flügel (162) symmetrisch um das Gehäuse verteilt sind.

3. Eine Anordnung nach Anspruch 2, in der jeder Flügel (162) in einem Abstand von der Größenordnung von 1/8 der axialen Länge der Anordnung zu einem anderen Flügel axial versetzt angeordnet ist.

4. Eine Anordnung nach einem der vorausgehenden Ansprüche, in der das Gehäuse einen Deckel mit mehreren Konstruktionsteilen (144) beinhaltet, um sie an die Kolonne zu schweißen.

5. Eine Anordnung nach einem der vorausgehenden Ansprüche, bei der das Gehäuse eine allgemein zylindrische, kreisförmige Innenwand mit mehreren Streben (150) besitzt, die um sie herum angebracht sind, um sie an der Kolonne zu befestigen.

6. Eine Anordnung nach einem der vorausgehenden Ansprüche, bei der die Flügel (162) in dem Gehäuse in einem Winkel in Bezug auf die Achse der Anordnung verteilt sind, um den Dampf nach innen und nach unten aus dem Dampfansatzrohr (152) abströmen zu lassen.

7. Eine Anordnung nach einem der vorausgehenden Ansprüche, bei der der bestimmte Winkel der Platten (162) etwa 30° bezogen auf den nach außen auf eine dieser Platten gerichteten Radiusvektor des Gehäuses beträgt.

## Revendications

1. Assemblage formant pavillon à vapeur, destiné à être monté dans une colonne de traitement chimique au voisinage d'une buse à vapeur (152) et à partir duquel de la vapeur est distribuée dans une région de vapeur, l'assemblage comportant un corps ayant une paroi intérieure circulaire (140) et une plaque supérieure (142) assujettie au-dessus de celle-ci, et étant adapté pour être assujetti à la paroi intérieure de la colonne de traitement (10) au voisinage de la buse à vapeur (152) et en communication de fluide avec cette dernière; et une multiplicité d'ailettes (162) de hauteur prédéterminée, disposées symétriquement à l'intérieur du corps pour diriger, dans la colonne (10), le flux de vapeur à partir de la buse (152) et en passant par le corps, afin d'établir une région de vapeur homogène, les ailettes (162) étant décalées axialement à l'intérieur du corps et comprenant une multiplicité de plaques angulaires, ayant chacune une largeur prédéfinie et comprenant une région supérieure arquée (164) adaptée pour recevoir le flux de vapeur en provenance de la buse, et une partie inférieure plane (166) adaptée pour dévier ce flux de vapeur reçu, les parties inférieures planes desdites plaques comportant une partie découpée (172) ayant une largeur de l'ordre du tiers de la largeur de la plaque et une hauteur axiale de l'ordre de la moitié de la hauteur d'ailette préférée, la partie découpée favorisant l'échappement de liquide dispersé sur elle lors du passage de la vapeur, et les plaques étant assujetties à l'intérieur dudit corps sous un angle prédéfini par rapport au diamètre de paroi interne.

2. Assemblage selon la revendication 1, dans lequel huit ailettes (162) sont disposées symétriquement autour du corps.

3. Assemblage selon la revendication 2, dans lequel les ailettes (162) sont décalées axialement chacune l'une par rapport à l'autre d'une distance de l'ordre de 1/8 de la longueur axiale de l'assemblage.

4. Assemblage selon l'une quelconque des revendications précédentes, dans lequel le corps comprend une partie supérieure ayant une multiplicité d'éléments structuraux (144) destinés à être soudés à ladite colonne.

5. Assemblage selon l'une quelconque des revendications précédentes, dans lequel le corps comporte une paroi intérieure circulaire de forme générale cylindrique, comportant une multiplicité d'entretoises (150) assujetties autour de celle-ci en vue d'une fixation à ladite colonne.

6. Assemblage selon l'une quelconque des revendications précédentes, dans lequel les ailettes (162) sont disposées à l'intérieur du corps sous un angle relatif par rapport à l'axe de l'assemblage afin de décharger la vapeur vers l'intérieur et vers le bas à partir de la buse à vapeur (152).

7. Assemblage selon l'une quelconque des revendications précédentes, dans lequel l'angle prédéfini que forment les plaques (162) avec le rayon du corps s'étendant vers l'extérieur en direction desdites plaques est de l'ordre de 30°.
